# FASCICULE DE BREVET EUROPEEN

(11) **EP 0 707 364 B1**
(45) Date de publication et mention de la délivrance du brevet: **04.11.1998**
(21) Numéro de dépôt: 95410093.9
(22) Date de dépôt: 05.09.1995
(51) Int. Cl.: H02B 13/075, H02B 13/065

(54) **Appareillage électrique à haute tension et à isolement gazeux équipé d'un dispositif court-circuiteur d'arc**
Gasisoliertes Hochspannungsgerät mit einem Lichtbogenkurzschlusselement
High voltage, gas insulated electric switchgear equipped with an arc short-circuiting device

(30) Priorité: 12.10.1994 FR 9412377
(43) Date de publication de la demande: 17.04.1996
(73) Titulaire: SCHNEIDER ELECTRIC SA, 92100 Boulogne Billancourt (FR)
(72) Inventeur: Jay, Claude, F-38050 Grenoble Cedex 09 (FR); Cayoux, Bernard, F-38050 Grenoble Cedex 09 (FR); Chaudouard, Pierre, F-38050 Grenoble Cedex 09 (FR); Orban, Jean-Claude, F-38050 Grenoble Cedex 09 (FR); Picot, Philippe, F-38050 Grenoble Cedex 09 (FR)
(74) Mandataire: Hecké, Gérard

(56) Documents cités:
- DE-A- 3 131 417
- DE-A- 4 302 416

## Description

L'invention est relative à un appareillage électrique multipolaire à haute tension, ayant des pièces conductrices sous tension logées dans une enveloppe métallique étanche, remplie de gaz isolant à rigidité diélectrique élevée, notamment de l'hexafluorure de soufre, ledit appareillage étant équipé d'un dispositif court-circuiteur d'arc, rendu actif en cas d'amorçage interne suite à une défaillance de l'isolation gazeuse, et comportant :
- un mécanisme à accumulation d'énergie associé à un équipage mobile de support de premiers moyens de contacts susceptibles de coopérer avec des seconds moyens de contacts fixés aux pièces conductrices,
- un dispositif de déclenchement doté d'un levier d'accrochage déplaçable entre une position armée correspondant à la séparation desdits premiers et seconds moyens de contact, et une position déclenchée de libération du mécanisme pour la fermeture desdits moyens de contacts,
- un détecteur de pression sensible à la variation de pression du gaz à l'intérieur de l'enveloppe pour provoquer le passage du levier d'accrochage de la position armée vers la position déclenchée au-delà d'un seuil prédéterminé faisant suite à la formation d'un arc interne,
- l'ensemble des organes du mécanisme, du dispositif de déclenchement, et du détecteur de pression étant entièrement contenu à l'intérieur de l'enveloppe fermée.

Le principe d'un tel court-circuiteur d'arc consiste à supprimer l'arc interne en le shuntant par un chemin conducteur solide de faible impédance constituant un court-circuit entre les conducteurs de phase de l'équipement électrique.

Le document FR-A-2.687.022 se rapporte à un appareillage blindé équipé d'un sectionneur automatique de mise à la terre utilisant trois conducteurs en forme de couteaux montés sur un arbre rotatif commun. Le mécanisme de déclenchement comporte un détecteur de pression à piston. L'équipage mobile présente un poids non négligeable susceptible de retarder le temps de fermeture des contacts de mise à la terre. La forme en couteau des contacts mobiles impose un mécanisme surdimensionné ou des contacts compensés à cause de l'effet des efforts de répulsion électrodynamique.

Un premier objet de l'invention consiste à alléger l'équipage mobile pour diminuer le temps de fermeture du dispositif court-circuiteur d'arc.

Un deuxième objet de l'invention consiste à diminuer la puissance du mécanisme à accumulation d'énergie, tout en assurant la tenue au courant de court-circuit.

Un troisième objet de l'invention consiste à améliorer la fiabilité du détecteur de pression associé à l'accrochage du dispositif court-circuiteur.

L'appareillage selon l'invention est caractérisé en ce que les seconds moyens de contacts sont formés par trois plots fixes, de sections sensiblement cylindriques, séparés les uns des autres par deux intervalles de pontage, et que les premiers moyens de contacts comportent une paire de ponts de contacts mobiles destinés à s'insérer en position déclenchée du levier d'accrochage, dans les intervalles correspondants pour venir en engagement avec des génératrices des plots fixes en assurant le court-circuitage entre les phases des pièces conductrices. L'usage de deux contacts mobiles pour assurer le court-circuitage permet d'alléger l'équipage mobile avec une fermeture rapide des contacts.

Chaque pont de contact est conformé en coin, ayant deux rampes disposées à angle aigu au droit de l'intervalle de pontage correspondant, de manière à résister aux efforts de répulsion électrodynamique lors du court-circuitage. La structure en coin permet de résister aux efforts de répulsion électrodynamiques, et évite tout recours à des contacts compensés, ou à des mécanismes surpuissants.

Selon une caractéristique de l'invention, le levier d'accrochage comporte un crochet coopérant en position armée avec un galet de retenue fixé à un coulisseau de l'équipage mobile, la zone de verrouillage du galet étant située dans le plan central de symétrie des deux ponts de contacts. Le mécanisme est pourvu de deux ressorts sollicitant le coulisseau en direction des seconds moyens de contacts lors du déplacement du levier d'accrochage vers la position déclenchée.

Le détecteur de pression est composé d'une membrane en matériau déformable, montée à étanchéité sur une ouverture d'une chambre auxiliaire, laquelle communique avec le volume restant de l'enveloppe à travers un orifice calibré de décompression, le volume de référence de ladite chambre étant inférieur à celui de l'enveloppe. L'usage d'un détecteur à membrane permet d'éliminer les fuites, et évite tout risque de coincement susceptible de bloquer l'action de déclenchement du détecteur.

D'autres avantages ressortiront plus clairement de la description qui va suivre d'un mode de réalisation de l'invention, donné à titre d'exemple non limitatif, et représenté aux dessins annexés, dans lesquels :

La figure 1 représente le schéma électrique d'un tableau triphasé, à cellules d'arrivées équipées d'un dispositif court-circuiteur d'arc.

La figure 2 est une vue en coupe du dispositif court-circuiteur selon la ligne 2-2 de la figure 3, le dispositif court-circuiteur étant en position d'ouverture.

La figure 3 montre une vue en élévation du dispositif court-circuiteur, représenté en position d'ouverture.

La figure 4 est une vue identique à la figure 3 en position de fermeture du dispositif court-circuiteur.

La figure 5 est une vue identique à la figure 2 en position de fermeture du dispositif court-circuiteur.

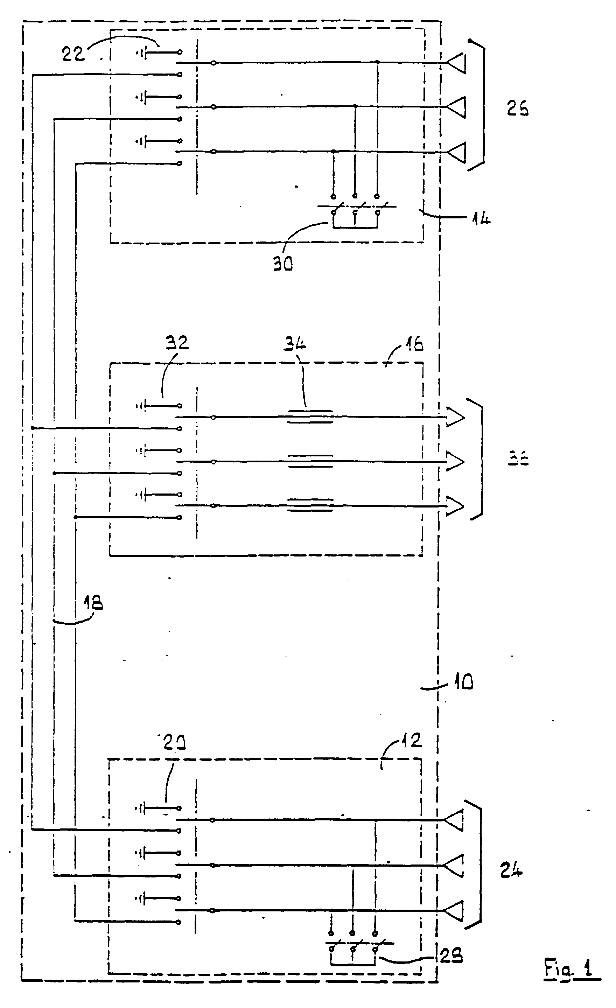

Sur la figure 1, un tableau électrique 10 triphasé à moyenne ou haute tension est composé de deux unités fonctionnelles ou cellules d'arrivée 12, 14 interconnectées électriquement par un jeu de barres 18 commun à une troisième unité fonctionnelle ou cellule 16 de départ et de protection. La structure générale du tableau 10 est décrite à titre d'exemple dans le brevet français 2.507.835 de la demanderesse.

Chaque cellule d'arrivée 12, 14 comporte un interrupteur ou disjoncteur triphasé 20, 22 à trois positions, raccordé entre le jeu de barres 18 et des câbles d'entrée 24, 26 connectés au réseau, et un dispositif court-circuiteur d'arc 28, 30, qui sera décrit en détail par la suite.

La cellule départ 16 comprend un interrupteur triphasé 32 à trois positions, connecté par des coupe-circuits à fusibles 34 à des câbles de sortie 36 pour l'alimentation d'un récepteur, notamment un transformateur (non représenté). Il est clair que l'ensemble interrupteur 32 et coupe-circuits à fusibles 34 peut être remplacé par un disjoncteur.

Chaque interrupteur 20, 22, 32 est doté par phase d'un contact mobile coopérant avec un mécanisme pour occuper soit une position de fermeture, soit une position d'ouverture, soit une position de mise à la terre.

La totalité des parties conductrices sous tension de l'équipement, est logé dans une enveloppe 38 métallique et fermée, remplie de gaz isolant à rigidité diélectrique élevée, notamment de l'hexafluorure de soufre SF6.

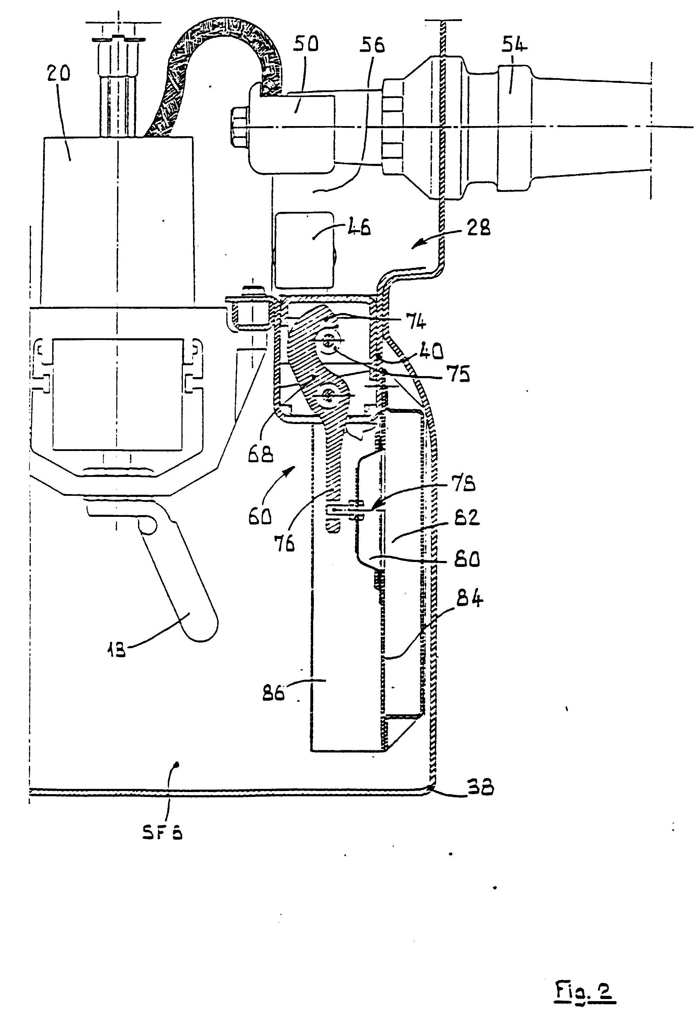

En référence aux figures 2 à 5, le dispositif court-circuiteur 28 d'arc de la cellule d'arrivée 12, est identique à celui 30 de l'autre cellule d'arrivée 14, et est entièrement logé à l'intérieur de l'enveloppe 38 étanche. Un châssis 40 fixe est solidarisé à la paroi interne de l'enveloppe 38, et sert de support au dispositif court-circuiteur 28, lequel comporte un équipage mobile 42 ayant une paire de contacts 44, 46 en ponts coopérant avec trois contacts fixes 48, 50, 52 agencés sur les parties internes des traversées 54 en liaison avec les câbles d'entrée 24 des phases correspondantes.

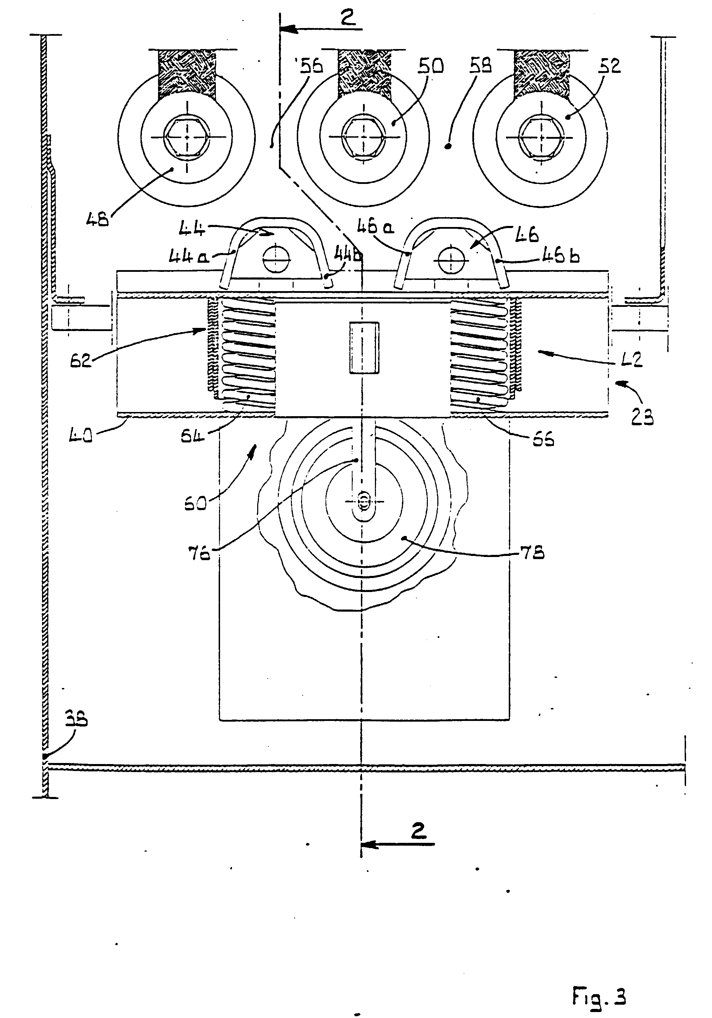

Les contacts fixes 48, 50, 52 présentent une section cylindrique, en étant séparés les uns des autres à l'intérieur de l'enveloppe 38 par deux intervalles 56, 58 de pontage (figure 3) ayant des largeurs identiques.

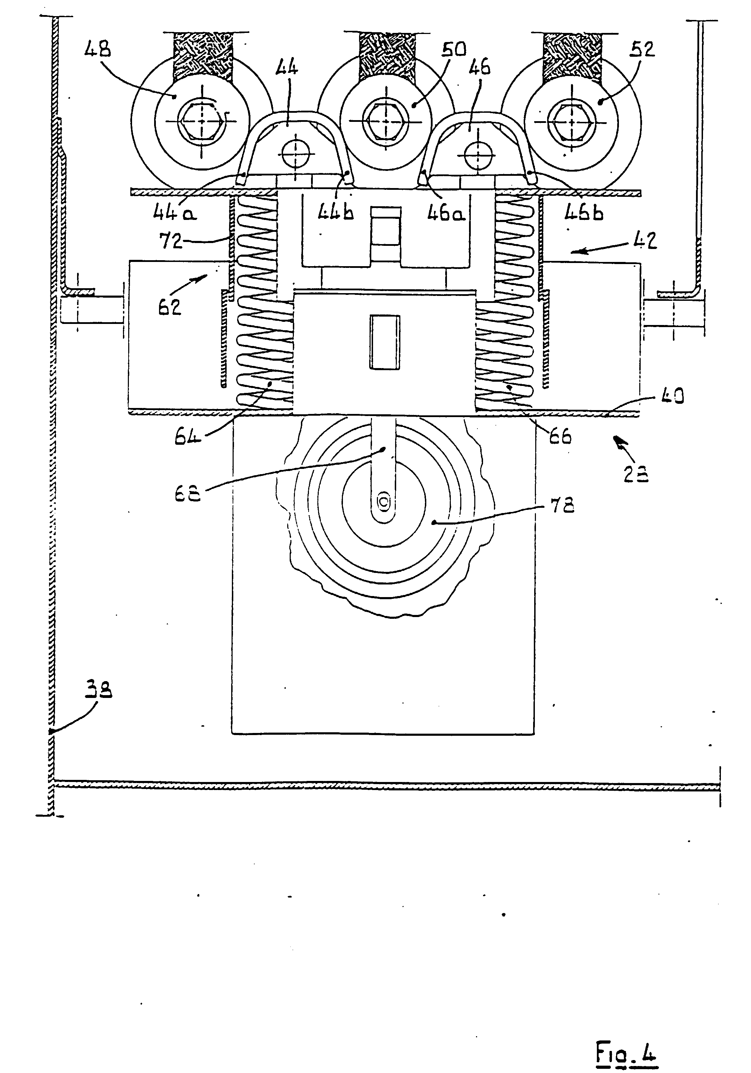

Chaque contact en pont 44, 46 de l'équipage mobile 42 est équipé de deux rampes 44a, 44b; 46a, 46b latérales, faisant entre elles un angle aigu, pour former un coin venant s'insérer dans l'intervalle 56, 58 correspondant en position de fermeture (figure 4). Les faces latérales du coin viennent en engagement contre deux génératrices parallèles des contacts fixes 48, 50, 52 cylindriques.

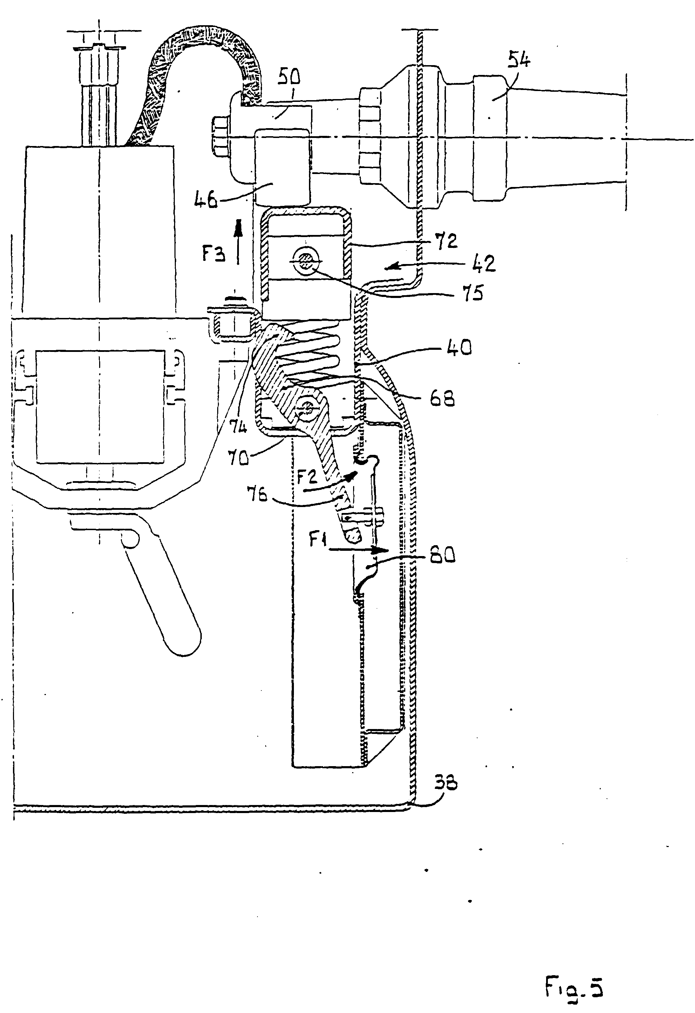

A l'équipage mobile 42 est associé un mécanisme 60 à accumulation d'énergie, comprenant un guide télescopique 62 de support de deux ressorts 64, 66 de compression, et un levier d'accrochage 68 monté à pivotement limité sur un axe 70 entre une position armée (figure 2) et une position déclenchée (figure 5). Les deux ressorts 64, 66 prennent appui sur le châssis 40 en sollicitant le coulisseau 72 mobile du guide télescopique 62 en direction des contacts fixes 48, 50, 52, les contacts en pont 44, 46 étant agencés sur le coulisseau 72 à l'opposé des ressorts 64, 66.

Le levier d'accrochage 68 comporte un crochet 74 à bord interne arrondi coopérant en position armée avec un galet 75 de retenue solidaire du coulisseau 72. A l'opposé du crochet 74 se trouve une languette 76 de commande pilotée par un dispositif de déclenchement à détecteur de pression 78, lequel libère le levier d'accrochage 68 en sollicitant le crochet 74 vers la position déclenchée en cas d'élévation rapide de la pression du gaz SF6 à l'intérieur de l'enveloppe 38.

Le détecteur de pression 78 est logé à l'intérieur de l'enveloppe 38, et est pourvu d'une membrane 80 en matériau déformable étanche, destinée à transformer la variation de pression en un effort mécanique F1 exercé sur la languette 76 de commande du levier d'accrochage 68. La membrane 80 est montée à étanchéité sur une ouverture d'une chambre 82 auxiliaire communiquant avec le volume interne de l'enveloppe 38 à travers un orifice 84 calibré de décompression, le volume de référence de la chambre 82 étant inférieur au volume restant de l'enveloppe 38. Le débit de fuite par l'orifice 84 calibré permet d'égaliser des variations de pression lentes entre les deux volumes, par exemple suite à des variations de température, et à éviter toute rupture de la membrane 80 lors des opérations de mise sous vide et de remplissage de l'enveloppe 38 par le gaz isolant SF6.

La membrane 80 et la languette 76 du levier d'accrochage 68 sont protégées des parties sous tension par un capot 86 en matériau conducteur, se trouvant au potentiel de la terre. La présence de ce capot 86 améliore la tenue diélectrique du tableau 10 et place le détecteur de pression 78 dans une zone à champ électrique quasi-nul, ce qui évite tout amorçage d'un arc interne entre les parties sous tension, et un élément sensible du dispositif court-circuiteur 28.

La zone de verrouillage du galet 75 de retenue par le levier d'accrochage 68 est située dans une position médiane, et notamment dans le plan central de symétrie des contacts en pont 44, 46, et des ressorts 64, 66, de manière à obtenir une répartition uniforme de l'effort de maintien du coulisseau 72 pour l'action de compression des ressorts 64, 66 en position armée du mécanisme 60.

Les contacts en pont 44, 46 et les contacts fixes 48, 50, 52 sont réalisés en cuivre, sans revêtement spécial.

Le fonctionnement du dispositif court-circuiteur 28 selon l'invention est le suivant : Pendant la période de fonctionnement normal du tableau électrique 10, la pression du gaz SF6 à l'intérieur de l'enveloppe 38 est constante, et atteint une valeur voisine de 1 à 2 bars. Les contacts en pont 44, 46 sont ouverts (figures 2 et 3), et sont maintenus en permanence dans cette position par l'action de verrouillage du coulisseau 72 dans l'état armé du mécanisme 60 à accumulation d'énergie.

En cas de défaillance de l'isolation gazeuse à l'intérieur de l'enveloppe 38, un amorçage peut se produire, par exemple entre des conducteurs du jeu de barres 18, ce qui entraîne la formation d'un arc interne, et une élévation rapide de la pression du gaz SF6 à l'intérieur de l'enveloppe 38. Il en résulte un différentiel de pression par rapport au volume de référence de la chambre 82 auxiliaire, provoquant l'enfoncement de la membrane 80 dans le sens de la flèche F1 (figure 5). Le mouvement d'enfoncement de la membrane 80 entraîne le pivotement du levier d'accrochage 68 dans le sens de la flèche F2 autour de l'axe 70, de manière à libérer le galet 75 pour le passage du mécanisme 60 à l'état déclenché.

La détente des ressorts 64, 66 propulse le coulisseau 72 de l'équipage mobile 42 dans le sens de la flèche F3 (figure 5), ce qui entraîne l'insertion rapide des deux ponts de contact 44, 46 dans les intervalles 56, 58 entre les trois contacts fixes 48, 50, 52. La fermeture des contacts provoque le court-circuitage des trois phases, et l'extinction de l'arc interne lorsque ce dernier est alimenté par le réseau 24. L'arc est shunté par un chemin conducteur solide de faible impédance constituant un court-circuit entre les conducteurs de phase de l'équipement électrique.

La forme en coin des ponts de contacts 44, 46 permet d'obtenir des pressions de contact supérieures à la poussée des ressorts 64, 66, et de résister aux efforts de répulsion électrodynamique sans recourir à des ressorts surdimensionnés. Après la fermeture du dispositif court-circuiteur 28, le dimensionnement spécifique des contacts fixes 48, 50, 52 et des ponts de contact 44, 46 leur permet de supporter le courant de court-circuit pendant la durée correspondant au délai d'intervention des protections amont du réseau.

La présence du capot 86 conducteur relié à la terre confine une zone à champ électrique nul, dans laquelle sont disposés les éléments sensibles du détecteur de pression 78. L'arc interne n'arrive pas à pénétrer dans cette zone, et le fonctionnement du dispositif court-circuiteur 28 est assuré en toute sécurité, indépendamment du lieu d'apparition de l'arc à l'intérieur de l'enveloppe 38.

La structure du dispositif court-circuiteur 28 prend en compte les exigences suivantes ;
- absence de fonctionnement intempestif sous l'action des différents agents susceptibles d'affecter l'équipement électrique;
- fonctionnement assuré en cas d'arc interne d'intensité et de durée comprises entre des valeurs prédéterminées et assignées par le constructeur.

Pour l'installation du tableau sur le site, il est possible de cadenasser les dispositifs court-circuiteurs 28, 30 en position ouvert, en associant des moyens de blocage au levier d'accrochage 68 de manière à empêcher le déclenchement intempestif du mécanisme 60 à accumulation en présence de chocs mécaniques pouvant apparaître lors de la manipulation ou du transport du tableau.

Il est clair que le coulisseau du mécanisme 60 pourrait être remplacé par un équipage mobile pivotant.

## Revendications

1. Appareillage électrique multipolaire à haute tension, ayant des pièces conductrices sous tension logées dans une enveloppe (38) métallique étanche, remplie de gaz isolant à rigidité diélectrique élevée, notamment de l'hexafluorure de soufre, ledit appareillage étant équipé d'un dispositif court-circuiteur (28, 30) d'arc, rendu actif en cas d'amorçage interne suite à une défaillance de l'isolation gazeuse, et comportant :
- un mécanisme (60) à accumulation d'énergie associé à un équipage mobile (42) de support de premiers moyens de contacts (44, 46) susceptibles de coopérer avec des seconds moyens de contacts (48, 50, 52) fixés aux pièces conductrices,
- un dispositif de déclenchement doté d'un levier d'accrochage (68) déplaçable entre une position armée correspondant à la séparation desdits premiers et seconds moyens de contact, et une position déclenchée de libération du mécanisme (60) pour la fermeture desdits moyens de contacts,
- un détecteur de pression (78) sensible à la variation de pression du gaz à l'intérieur de l'enveloppe (38) pour provoquer le passage du levier d'accrochage (68) de la position armée vers la position déclenchée au-delà d'un seuil prédéterminé faisant suite à la formation d'un arc interne,
- l'ensemble des organes du mécanisme (60), du dispositif de déclenchement, et du détecteur de pression (78) étant entièrement contenu à l'intérieur de l'enveloppe (38) fermée,
caractérisé en ce que
les seconds moyens de contacts (48, 50, 52) sont formés par trois plots fixes, de sections sensiblement cylindriques, séparés les uns des autres par deux intervalles (56, 58) de pontage, et que les premiers moyens de contacts (44, 46) comportent une paire de ponts de contacts mobiles destinés à s'insérer en position déclenchée du levier d'accrochage (68), dans les intervalles (56, 58) correspondants pour venir en engagement avec des génératrices des plots fixes en assurant le court-circuitage entre les phases des pièces conductrices.

2. Appareillage électrique selon la revendication 1, caractérisé en ce que chaque pont de contact (44, 46) est conformé en coin, ayant deux rampes (44a, 44b; 46a, 46b) disposées à angle aigu au droit de l'intervalle de pontage (56, 58) correspondant, de manière à résister aux efforts de répulsion électrodynamique lors du court-circuitage.

3. Appareillage électrique selon la revendication 1 ou 2, caractérisé en ce que le levier d'accrochage (68) comporte un crochet (74) coopérant en position armée avec un galet (75) de retenue fixé à un coulisseau (72) de l'équipage mobile (42), la zone de verrouillage du galet (75) étant située dans le plan central de symétrie des deux ponts de contacts (44, 46), et que le mécanisme (60) est pourvu de deux ressorts (64, 66) sollicitant le coulisseau (72) en direction des seconds moyens de contacts (48, 50, 52) lors du déplacement du levier d'accrochage (68) vers la position déclenchée.

4. Appareillage électrique selon l'une des revendications 1 à 3, caractérisé en ce que le détecteur de pression (78) est composé d'une membrane (80) en matériau déformable, montée à étanchéité sur une ouverture d'une chambre (82) auxiliaire, laquelle communique avec le volume restant de l'enveloppe (38) à travers un orifice (84) calibré de décompression, le volume de référence de ladite chambre (82) étant inférieur à celui de l'enveloppe (38).

5. Appareillage électrique selon la revendication 4, caractérisé en ce que la membrane (80) du détecteur de pression (78) est accouplée à une languette (76) de commande du levier d'accrochage (68) pivotant.

6. Appareillage électrique selon l'une des revendications 1 à 5, caractérisé en ce qu'un capot (86) en matériau conducteur recouvre le détecteur de pression (78) pour former une zone à champ électrique quasi-nul, ledit capot (86) étant connecté électriquement à la terre.

7. Appareillage électrique selon l'une des revendications 1 à 6, caractérisé en ce que le dispositif court-circuiteur (28, 30) est supporté par un châssis (40) solidarisé à la paroi interne de l'enveloppe (38) métallique.

## Patentansprüche

1. Mehrpoliges elektrisches Hochspannungsschaltgerät mit spannungsführenden leitenden Teilen, die in einem gasdichten, mit einem isolierten Gas hoher dielektrischer Festigkeit, insbesondere Schwefelhexafluorid gefüllten Metallgehäuse (38) angeordnet sind, wobei das genannte Schaltgerät mit einer Lichtbogen-Kurzschließvorrichtung (28, 30) ausgerüstet ist, die bei Auftreten eines internen Durchschlags aufgrund einer fehlerhaften Gasisolierung anspricht und
- einen Kraftspeicherantrieb (60), der einer beweglichen Trägereinheit (42) für erste Kontaktmittel (44, 46) zugeordnet ist, die dazu dienen, mit an den leitenden Teilen befestigten zweiten Kontaktmitteln (48, 50, 52) zusammenzuwirken,
- eine Auslösevorrichtung mit einem Verklinkungshebel (68), der zwischen einer, der Trennung der genannten ersten und zweiten Kontaktmittel entsprechenden Gespanntstellung und einer, der Freigabe des Antriebs (60) zwecks Einschaltung der genannten Kontaktmittel entsprechenden Ausgelöststellung verschwenkt werden kann, sowie
- einen Druckdetektor (78) umfaßt, der eine Änderung des Gasdrucks im Innern des Gehäuses (38) erfaßt, um bei Überschreiten eines bestimmten Schwellwerts aufgrund der Bildung eines internen Lichtbogens den Übergang des Verklinkungshebels (68) von der Gespanntstellung in die Ausgelöststellung zu bewirken, wobei
- sämtliche Teile des Antriebs (60), der Auslösevorrichtung und des Druckdetektors (78) vollständig im Innern des geschlossenen Gehäuses (38) angeordnet sind,
dadurch gekennzeichnet, daß
die zweiten Kontaktmittel (48, 50, 52) als drei, durch zwei Brückungszwischenräume (56, 58) voneinander getrennte, feststehende Kontaktstifte mit annähernd zylindrischem Querschnitt ausgebildet sind und daß die ersten Kontaktmittel (44, 46) zwei bewegliche Kontaktbrücken umfassen, die dazu dienen, sich in der Ausgelöststellung des Verklinkungshebels (68) in die zugehörigen Brückungszwischenräume (56, 58) zu schieben, um in Anschlag gegen Mantellinien der feststehenden Stifte zu gelangen und dabei ein Kurzschließen der Phasen der leitenden Teile zu gewährleisten.

2. Elektrisches Schaltgerät nach Anspruch 1, dadurch gekennzeichnet, daß jede Kontaktbrücke (44, 46) in Form eines Keils mit zwei, gegenüber dem zugehörigen Brückungszwischenraum (56, 58) in einem spitzen Winkel zueinander stehenden Schrägen (44a, 44b, 46a, 46b) ausgebildet ist, so daß die beim Kurzschließen auftretenden elektrodynamischen Rückprallkräfte aufgenommen werden können.

3. Elektrisches Schaltgerät nach Anspruch 1 oder 2, dadurch gekennzeichnet, daß der Verklinkungshebel (68) einen Haken (74) umfaßt, der in der Gespanntstellung mit einer, an einem Schieber (72) der beweglichen Einheit (42) befestigten Rückhalterolle (75) zusammenwirkt, wobei der Verriegelungsbereich der Rolle (75) in der mittleren Symmetrieebene der beiden Kontaktbrücken (44, 46) angeordnet ist, und daß der Antrieb (60) zwei Federn (64, 66) aufweist, die den Schieber (72) beim Verschwenken des Verklinkungshebels (68) in die Ausgelöststellung in Richtung der zweiten Kontaktmittel (48, 50, 52) beaufschlagen.

4. Elektrisches Schaltgerät nach einem der Ansprüche 1 bis 3, dadurch gekennzeichnet, daß der Druckdetektor (78) aus einer Membran (80) aus einem verformbaren Material besteht, die gasdicht über eine Öffnung einer Hilfskammer (82) angebracht ist, welche über ein kalibrierte Überdrucköffnung (84) mit dem restlichen Innenraum des Gehäuses (38) in Verbindung steht, wobei der Referenzraum der genannten Kammer (82) kleiner ist als der des Gehäuses (38).

5. Elektrisches Schaltgerät nach Anspruch 4, dadurch gekennzeichnet, daß die Membran (80) des Druckdetektors (78) mit einer Steuerzunge (76) zur Betätigung des schwenkbaren Verklingshebels (68) gekoppelt ist.

6. Elektrisches Schaltgerät nach einem der Ansprüche 1 bis 5, dadurch gekennzeichnet, daß eine Abdeckung (86) aus einem leitenden Material den Druckdetektor (78) umgibt, um einen quasi-feldfreien Raum zu bilden, wobei die genannte Abdeckung (86) elektrisch mit Erde verbunden ist.

7. Elektrisches Schaltgerät nach einem der Ansprüche 1 bis 6, dadurch gekennzeichnet, daß die Kurzschließvorrichtung (28, 30) auf einem fest mit der Innenwand des Metallgehäuses (38) verbundenen Chassis (40) montiert ist.

## Claims

1. A high voltage multipole electrical switchgear apparatus having live conducting parts housed in a sealed metallic enclosure (38) filled with high dielectric strength insulating gas, notably sulphur hexafluoride, said switchgear apparatus being equipped with an arc short-circuiting device (28, 30) rendered active in the event of an intemal flashover following a failure of the gas insulation, and comprising :
- an energy storage mechanism (60) associated to a movable assembly (42) supporting first contact means (44, 46) designed to cooperate with second contact means (48, 50, 52) fixed to the conducting parts,
- a tripping device equipped with a latching lever (68) movable between a loaded position corresponding to separation of said first and second contact means and a tripped position releasing the mechanism (60) for closing of said contact means,
- a pressure detector (78) sensitive to the variation of the gas pressure inside the enclosure (38) to cause the latching lever (68) to move from the loaded position to the tripped position beyond a preset threshold following formation of an intemal arc,
- all the component parts of the mechanism (60), tripping device, and pressure detector (78) being entirely contained inside the closed enclosure (38),
characterized in that
the second contact means (48, 50, 52) are formed by three fixed studs, of appreciably cylindrical cross sections, separated one from the other by two bridging gaps (56, 58), and that the first contact means (44, 46) comprise a pair of movable contact bridges designed to be inserted in the tripped position of the latching lever (68) into the corresponding gaps (56, 58) to come into engagement with generating lines of the fixed studs performing short-circuiting between the phases of the conducting parts.

2. The electrical switchgear apparatus according to claim 1, characterized in that each contact bridge (44, 46) is shaped as a wedge having two ramps (44a, 44b; 46a, 46b) arranged at an acute angle facing the corresponding bridging gap (56, 58), in such a way as to withstand the electrodynamic repulsion forces when short-circuiting occurs.

3. The electrical switchgear apparatus according to claim 1 or 2, characterized in that the latching lever (68) comprises a hook (74) cooperating in the loaded position with a checking roller (75) fixed to a slide (72) of the movable assembly (42), the locking zone of the roller (75) being situated in the central plane of symmetry of the two contact bridges (44, 46), and that the mechanism (60) is provided with two springs (64, 66) urging the slide (72) in the direction of the second contact means (48, 50, 52) when the latching lever (68) moves to the tripped position.

4. The electrical switchgear apparatus according to one of the claims 1 to 3, characterized in that the pressure detector (78) is composed of a membrane (80) made of deformable material, mounted in leaktight manner on an opening of an auxiliary chamber (82), which chamber communicates with the remaining volume of the enclosure (38) via a calibrated decompression orifice (84), the reference volume of said chamber (82) being smaller than that of the enclosure (38).

5. The electrical switchgear apparatus according to claim 4, characterized in that the membrane of the pressure detector (78) is coupled to an operating tongue (76) of the pivoting latching lever (68).

6. The electrical switchgear apparatus according to one of the claims 1 to 5, characterized in that a cover (86) made of conducting material covers the pressure detector (78) to form a zone of almost nil electrical field, said cover (86) being electrically earthed.

7. The electrical switchgear apparatus according to one of the claims 1 to 6, characterized in that the short-circuiting device (28, 30) is supported by a frame (40) secured to the internal wall of the metallic enclosure (38).
